# EUROPEAN PATENT SPECIFICATION

(11) **EP 1 533 215 B1**
(45) Date of publication and mention of the grant of the patent: **28.12.2005**
(21) Application number: 03257389.1
(22) Date of filing: 24.11.2003
(51) Int. Cl.: B62J 1/28

(54) **Back supporting device for a motor vehicle seat**
Rückenstütze für ein Motorrad
Dossier dos pour motocyclette

(43) Date of publication of application: 25.05.2005
(73) Proprietor: Tseng, Fang-Sheng, Kaohsiung City (TW)
(72) Inventor: Tseng, Fang-Sheng, Kaohsiung City (TW)
(74) Representative: Doble, Richard George Vivian

(56) References cited:
- US-A- 3 822 917
- US-A- 4 030 750
- US-A- 4 032 189
- US-A- 5 026 119
- US-A- 5 441 330
- US-A- 5 518 291

## Description

This invention relates to a back-supporting device for a motor vehicle seat, and more particularly to a back-supporting device for a motor vehicle seat that includes a backrest which is movable on the seat.

A conventional motorcycle seat is shown to include a driver seat portion, a passenger seat portion, a luggage frame, and a backrest fixed on the luggage frame and disposed immediately behind the passenger seat portion. As such, the backrest cannot be used to support a driver's back.

It is known to provide a back supporting device for a motor vehicle seat that includes a backrest which is movable on the seat for supporting the back of a driver or a passenger.

In particular, US 3,822,917 discloses an adjustable back-supporting device for a motor vehicle seat, the back-supporting device comprising two slide rails, means for mounting the slide rails on the sides of the vehicle seat, two slide units slidably mounted on the respective slide rails and carrying respective upwardly-extending supporting frames, a backrest mounted on the upper ends of the supporting frames, and means for locking the slide units in at least one forward and at least one rearward position on said slide rails.

The present invention provides an adjustable back-supporting device as summarised above, characterised in that said slide rails converge and in that means are provided for allowing transverse movement of the supporting frames relative to the backrest to accommodate the convergence of the slide rails.

The invention further provides a motor vehicle seat having a driver seat portion disposed at a front portion of the motor vehicle seat, a passenger seat portion disposed immediately behind the driver seat portion, the width of the passenger seat portion reducing gradually from the front end to the rear end thereof, the motor vehicle seat having an adjustable back-supporting device as defined above, the slide rails of said back-supporting device being mounted on the sides of the vehicle seat.

Preferred features are defined in the dependent claims.

These and other features and advantages of a preferred embodiment of this invention will become apparent in the following detailed description of a preferred embodiment of this invention with reference to the accompanying drawings, in which:
Fig. 1 is a top view of an assembly of the preferred embodiment of a back-supporting device according to this invention and a motor vehicle seat;
Fig. 2 is a schematic sectional view of the assembly of the preferred embodiment and the motor vehicle seat;
Fig. 3 is a side view of the assembly of the preferred embodiment and the motor vehicle seat, illustrating how the position of a backrest of the preferred embodiment is adjusted;
Fig. 4 is a fragmentary top view of the assembly of the preferred embodiment and the motor vehicle seat, illustrating how an insert portion of a positioning member of the preferred embodiment is brought into engagement with a selected one of a plurality of positioning holes in a top surface of a sliding rail of the preferred embodiment; and
Fig. 5 is a perspective view of a positioning member of the preferred embodiment.

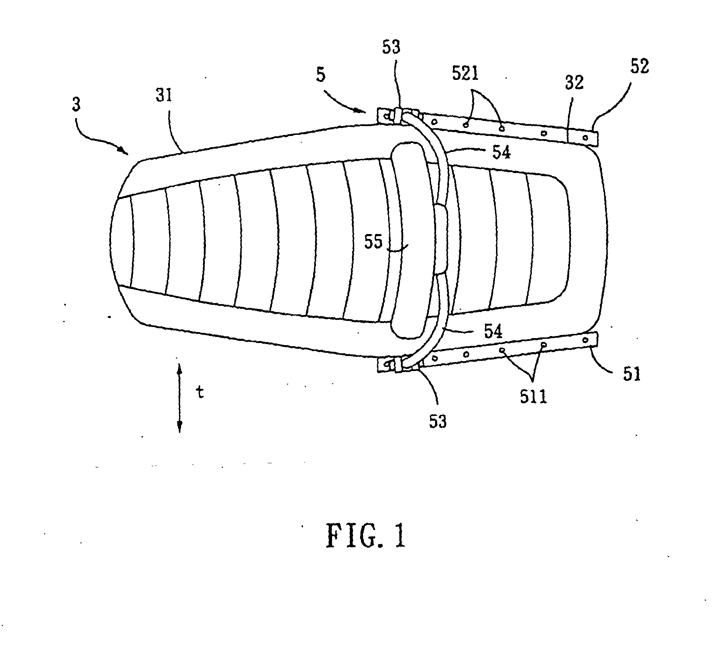

Referring to Figs. 1, 2, and 3, the preferred embodiment of a back supporting device 5 according to this invention is shown to include a pair of hollow left and right sliding rails 51, 52, two slide units 53, two supporting frames 54, a back supporting mechanism 55, and two locking units in the form of lock bolts 56.

The back supporting device 5 is mounted on a motor vehicle seat 3 that is configured as a motorcycle seat and that has a driver seat portion 31 disposed at a front portion of the motor vehicle seat 3, and a passenger seat portion 32 disposed immediately behind the driver seat portion 31. The passenger seat portion 32 has a width that is reduced gradually from a front end thereof to a rear end thereof.

The left and right sliding rails 51, 52 are disposed respectively and fixedly on two opposite sides of the passenger seat portion 32, extend from the front end of the passenger seat portion 32 to the rear end of the passenger seat portion 32, and are spaced apart from each other by a distance along a transverse direction (t) (see Fig. 1) of the motor vehicle seat 3. The distance is reduced gradually from the front end of the passenger seat portion 32 to the rear end of the passenger seat portion 32, as shown in Fig. 1. Each of the left and right sliding rails 51, 52 has a top surface that is formed with a longitudinal row of positioning holes 511, 521, is shaped as a rectangular tube, and has an outer sidewall that is formed with a longitudinal slot 512, 522 therethrough.

Each of the slide units 53 includes a slidable element 531 received movably within a corresponding one of the left and right sliding rails 51, 52, a connecting member 532 disposed outwardly of the corresponding one of the left and right sliding rails 51, 52 and connected fixedly to the slidable element 531 by the corresponding lock bolt 56, and a positioning unit for retaining the slidable element 531 at a selected one of a plurality of positions relative to the corresponding one of the left and right sliding rails 51, 52. The slidable elements 531 are also shaped as rectangular tubes received respectively and fittingly within the left and right sliding rails 51, 52. Each of the slidable elements 531 of the slide units 53 has an outer sidewall that is formed with a threaded hole 531' therethrough. The lock bolts 56 extend respectively through the longitudinal slots 512, 522 in the left and right sliding rails 51, 52, and engage respectively the threaded holes 531' in the slidable elements 531 so as to lock the slidable elements 531 respectively and releasably within the left and right sliding rails 51, 52.

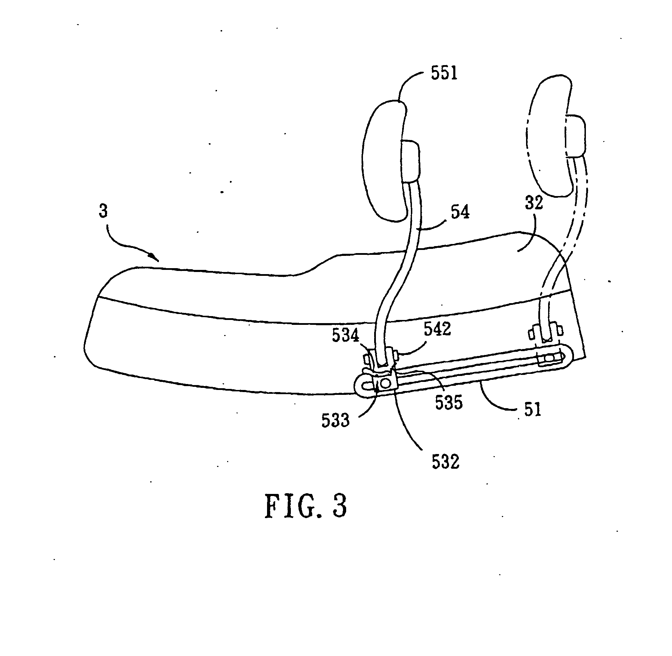

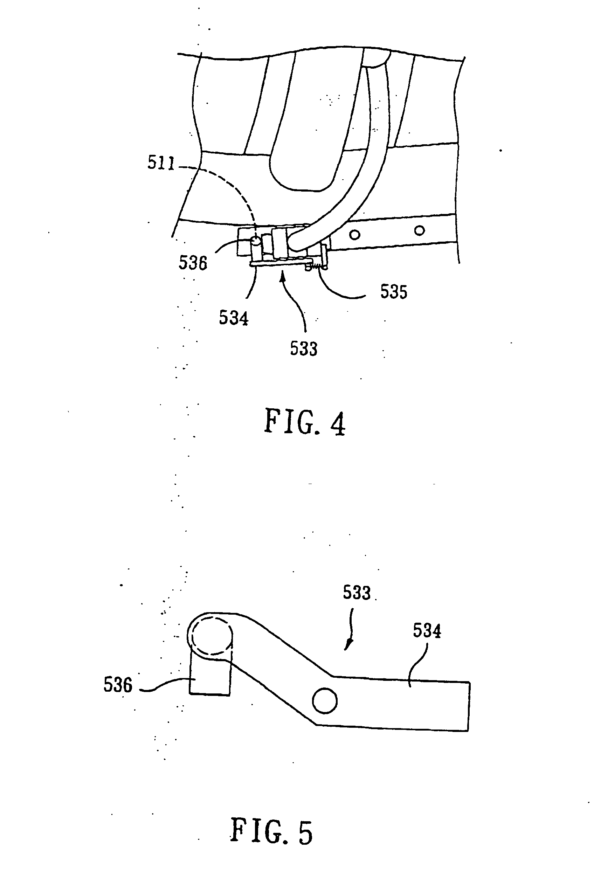

Each of the positioning units of the slide units 53 includes a positioning member 533 connected pivotally to the connecting member 532 of the corresponding slide unit 53, and a biasing unit that is configured as a coiled tension spring 535. Each of the positioning members 533 is shaped as a curved rod, and includes a zigzag rod portion 534 (see Fig. 5) connected pivotally to the connecting member 532 of the corresponding slide unit 53, and an insert portion 536 (see Figs. 4 and 5) that is shaped as an L-shaped rod and that is connected fixedly to a front end of the zigzag rod portion 534. Each of the coiled tension springs 535 has a front end fastened to a rear end of the corresponding zigzag rod portion 534, and a rear end disposed above the front end of the corresponding coiled tension spring 535 and fastened to the connecting member 532 of the corresponding slide unit 53, as shown in Fig. 3. As such, the insert portions 536 of the positioning members 533 are biased by the coiled tension springs 535 to turn downwardly so as to engage respectively two selected ones of the positioning holes 511, 521 in the top surfaces of the left and right sliding rails 51, 52.

Each of the supporting frames 54 has a curved rod body 541, an inverted T-shaped lower end 542 that is formed integrally with the curved rod body 541 and that is connected pivotally to the connecting member 532 of the corresponding slide unit 53 such that upper ends of the supporting frames 54 can rotate toward and away from each other, and an upper end 541' that is C-shaped and that defines a curved groove 543. The curved grooves 543 are located between the upper ends 541' of the supporting frames 54.

The back supporting mechanism 55 includes a backrest 551 mounted to the supporting frames 54 and disposed above the passenger seat portion 32, and a frame-positioning device 552 disposed between the backrest 551 and the supporting frames 54 to position the backrest 551 on the supporting frames 54. As such, when the lock bolts 56 are loosened, the slidable elements 531 are movable respectively and forcibly within the left and right sliding rails 51, 52.

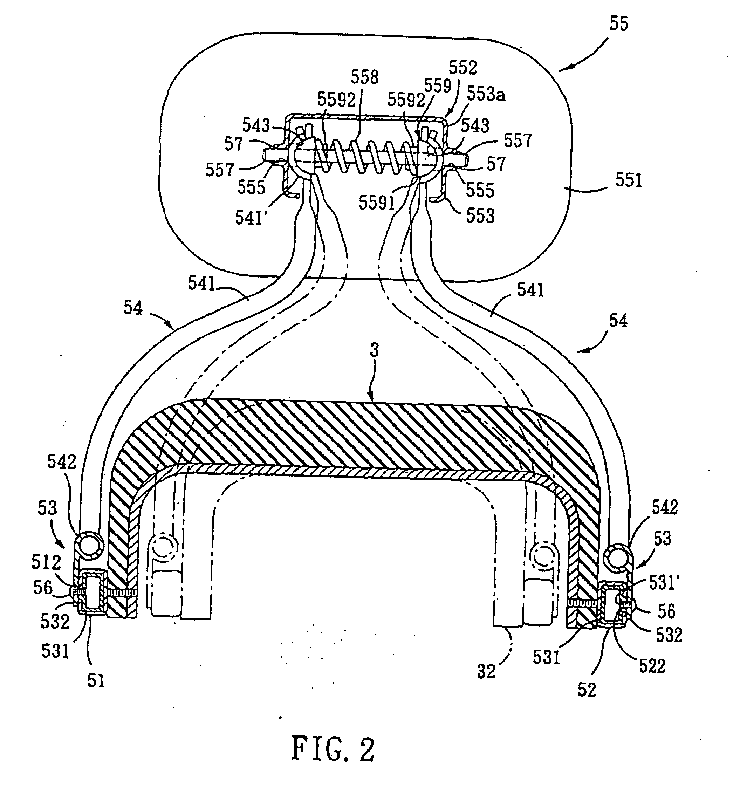

The frame-positioning device 552 includes an inverted U-shaped wall 553, a horizontal rod 557, a coiled compression spring 558, and two pressing elements 559. The inverted U-shaped wall 553 is mounted fixedly on the backrest 551, and has two parallel rod-supporting wall portions (553a). The horizontal rod 557 extends through holes 555 in the rod-supporting wall portions (553a) of the inverted U-shaped wall 553. Two retaining rings 57 are sleeved respectively and fixedly around two ends of the horizontal rod 557, and abut against the rod-supporting wall portions (553a) of the inverted U-shaped wall 553 so as to fix the horizontal rod 557 relative to the inverted U-shaped wall 553. The upper ends 541' of the supporting frames 54 are sleeved movably and rotatably on the horizontal rod 557 between the rod-supporting wall portions (553a) of the inverted U-shaped wall 553. The coiled compression spring 558 is sleeved around the horizontal rod 557 between the upper ends 541' of the supporting frames 54. Each of the pressing elements 559 is sleeved movably and rotatably around the horizontal rod 557 between the upper end 541' of the corresponding supporting frame 54 and the coiled compression spring 558, and has a semi-spherical outer portion 5591 that engages fittingly the curved groove 543 in the upper end 541' of the corresponding supporting frame 54, and a circular tubular inner portion 5592 that is formed integrally with the semi-spherical outer portion 5591. The coiled compression spring 558 has two ends that are sleeved respectively around the circular tubular inner portions 5592 of the pressing elements 559 and that press the semi-spherical outer portions 5591 of the pressing elements 559 and the upper ends 541' of the supporting frames 54 against the rod-supporting wall portions (553a) of the inverted U-shaped wall 553. As such, the upper ends 541' of the supporting frames 54 are positioned within the inverted U-shaped wall 553 such that the supporting frames 54 can be pivoted between an outer position shown by solid lines in Fig. 2 (corresponding to a forward position of the back supporting device) on the passenger seat and an inner position shown by phantom lines in Fig. 2 (corresponding to a rearward position of the back supporting device). Hence the back supporting device can be moved forcibly between the forward and rearward positions.

The back supporting device can be provided in partially or totally disassembled form as a kit of parts.

## Claims

1. An adjustable back-supporting device for a motor vehicle seat (3), the back-supporting device comprising two slide rails (51, 52), means for mounting the slide rails on the sides of the vehicle seat, two slide units (53) slidably mounted on the respective slide rails and carrying respective upwardly-extending supporting frames (54), a backrest (551) mounted on the upper ends of the supporting frames, and means (561, 511) for locking the slide units in at least one forward and at least one rearward position on said slide rails **characterised in that** said slide rails (51, 52) converge and **in that** means (557, 5591) are provided for allowing transverse movement of the supporting frames (54) relative to the backrest (551) to accommodate the convergence of the slide rails.

2. A motor vehicle seat (3) having a driver seat portion (31) disposed at a front portion of the motor vehicle seat (3), a passenger seat portion (32) disposed immediately behind the driver seat portion (31), the width of the passenger seat portion (32) reducing gradually from the front end to the rear end thereof, the motor vehicle seat having an adjustable back-supporting device (5) as claimed in claim 1, the slide rails (51, 52) of said back supporting device being mounted on the sides of the vehicle seat.

3. A motor vehicle seat (3) as claimed in claim 2, further **characterised by** two locking units for locking the respective slidable elements (531) releasably within the left and right sliding rails (51, 52) so as to fix the backrest (551) on the motor vehicle seat (3).

4. A motor vehicle seat (3) as claimed in claim 3, further **characterized in that** each of the left and right sliding rails (51, 52) is formed as a rectangular tube and has an outer sidewall that is formed with a longitudinal slot (512, 522) therethrough, the slidable elements (531) being also formed as rectangular tubes that are fitted within the left and right sliding rails (51, 52) respectively, each of the slidable elements (531) having an outer sidewall that is formed with a threaded hole (531') therethrough and **in that** the locking units are two lock bolts (56) that extend through the respective longitudinal slots (512, 522) in the left and right sliding rails (51, 52) and that engage the respective threaded holes (531') in the slidable elements (531) so as to lock the respective slidable elements (531) releasably within the left and right sliding rails (51, 52), whereby, when the lock bolts (56) are loosened, the slidable elements (531) can move within the respective left and right sliding rails (51, 52).

5. A motor vehicle seat (3) as claimed in any of claims 2 to 4, further **characterised in that** each of the left and right sliding rails (51, 52) has a top surface that is formed with a longitudinal row of positioning holes (511, 521), each of the positioning units including:
a positioning member (533) connected pivotally to a corresponding one of the connecting members (532) of the slide units (53) and having a fixed insert portion (536); and
a biasing unit for biasing the insert portion (536) of the positioning member (533) to engage a selected one of the positioning holes (511, 521) in the corresponding one of the left and right sliding rails (51, 52) so as to retain a corresponding one of the slidable elements (531) at the selected one of the positions relative to the corresponding one of the left and right sliding rails (51, 52).

6. A motor vehicle seat (3) as claimed in claim 5, further **characterised in that** each of the positioning members (533) is shaped as a curved rod, and further includes a zigzag rod portion (534) connected pivotally to the corresponding one of the connecting members (532) of the slide units (53), each of the insert portions (536) of the positioning members (533) being in the form of an L-shaped rod and being connected fixedly to an end of a corresponding one of the zigzag rod portions (534), each of the biasing units of the positioning units being configured as a coiled tension spring (535) that has two ends which are fastened respectively to the other end of the corresponding one of the zigzag rod portions (534) and the corresponding one of the connecting members (532) of the slide units (53).

7. A motor vehicle seat (3) as claimed in any of claims 2 to 6, **characterised in that** the frame-positioning device (552) includes:
an inverted U-shaped wall (553) mounted fixedly on the backrest (551) and having two parallel rod-supporting wall portions (553a);
a horizontal rod (557) extending through and connected fixedly to the rod-supporting wall portions (553a) of the inverted U-shaped wall(553), the upper ends (541') of the supporting frames (54) being sleeved movably and rotatably on the horizontal rod (557) between the rod-supporting wall portions (553a) of the inverted U-shaped wall (553); and
a coiled compression spring (558) sleeved around the horizontal rod (557) between the upper ends (541') of the supporting frames (54) so as to press the upper ends (541') of the supporting frames (54) respectively against the rod-supporting wall portions (553a) of the inverted U-shaped wall (553).

8. A motor vehicle seat (3) as claimed in claim 7, further **characterised in that** each of the upper ends (541') of the supporting frames (54) is C-shaped, and defines a curved groove (543), the curved grooves (543) in the upper ends (541') being located between the upper ends (541') of the supporting frames (54), the frame-positioning device (552) further including two pressing elements (559), each of which is sleeved movably and rotatably around the horizontal rod (557) between the upper end (541') of a respective one of the supporting frames (54) and the coiled compression spring (558), each of the pressing elements (559) having a semi-spherical outer portion (5591) that engages fittingly the curved groove (543) in the upper end (541') of the respective one of the supporting frames (54), and a circular tubular inner portion (5592) that is formed integrally with the semi-spherical outer portion (5591), the coiled compression spring (558) having two ends that are sleeved around the respective circular tubular inner portions (5592) of the pressing elements (559) and that press against the respective semi-spherical outer portions (5591) of the pressing elements (559).

## Patentansprüche

1. Verstellbare Rückenstützvorrichtung für einen Motorfahrzeugsitz (3), wobei die Rückenstützvorrichtung zwei Gleitschienen (51, 52) umfasst, eine Einrichtung zur Anbringung der Gleitschienen an den Seiten des Fahrzeugsitzes; zwei Schiebeeinheiten (53), die verschiebbar an den entsprechenden Gleitschienen angebracht sind und entsprechende sich nach oben erstreckende Stützrahmen (54) tragen, eine Rückenstütze (551), die an den oberen Enden der Stützrahmen angebracht sind, und eine Einrichtung (561, 511) zur Verriegelung der Schiebeeinheiten an mindestens einer vorderen und an mindestens einer hinteren Position an den genannten Gleitschienen, **dadurch gekennzeichnet, dass** die genannten Gleitschienen (51, 52) konvergieren, und dass Einrichtungen (557, 5591) vorgesehen sind, die eine transversale Bewegung der Stützrahmen (54) im Verhältnis zu der Rückenstütze (551) ermöglichen, um der Konvergenz der Gleitschienen Rechnung zu tragen.

2. Motorfahrzeugsitz (3) mit einem Fahrersitzabschnitt (32), der an einem vorderen Abschnitt des Motorfahrzeugsitzes (3) angeordnet ist, mit einem Beifahrersitzabschnitt (32), der unmittelbar hinter dem Fahrersitzabschnitt (31) angeordnet ist, wobei die Breite des Beifahrersitzabschnitts (32) allmählich von dem vorderen Ende zu dem hinteren Ende des Abschnitts kleiner wird, wobei der Motorfahrzeugsitz eine verstellbare Rückenstützvorrichtung (5) gemäß Anspruch 1 aufweist, wobei die Gleitschienen (51, 52) der genannten Rückenstützvorrichtung an den Seiten des Fahrzeugsitzes angebracht sind.

3. Motorfahrzeugsitz (3) nach Anspruch 2, ferner **gekennzeichnet durch** zwei Verriegelungseinheiten zur lösbaren Verriegelung der entsprechenden verschiebbaren Elemente (531) innerhalb der linken und rechten Gleitschienen (51, 52), um die Rückenstütze (551) an dem Motorfahrzeugsitz (3) zu fixieren.

4. Motorfahrzeugsitz (3) nach Anspruch 3, ferner **dadurch gekennzeichnet, dass** jede der linken und rechten Gleitschienen (51, 52) als eine rechteckige Röhre ausgebildet ist und eine äußere Seitenwand aufweist, die dort hindurch mit einem longitudinalen Schlitz (512, 522) ausgebildet ist, wobei die verschiebbaren Elemente (531) ebenso als rechteckige Röhren ausgebildet sind, die entsprechend in die linken und rechten Schienen (51, 52) passen, wobei jedes der verschiebbaren Elemente (531) eine äußere Seitenwand aufweist, die dort hindurch mit einer Gewindeöffnung (531') ausgebildet ist, und wobei es sich bei den Verriegelungseinheiten um zwei Verriegelungsbolzen (56) handelt, die sich durch die entsprechenden longitudinalen Schlitze (512, 522) in den linken und rechten Gleitschienen (51, 52) erstrecken, und die mit den entsprechenden Gewindeöffnungen (531') in den verschiebbaren Elementen (531) eingreifen, so dass die entsprechenden verschiebbaren Elemente (531) lösbar innerhalb der linken und rechten Führungsschienen (51, 52) verriegelt werden, wodurch sich, wenn die Verriegelungsbolzen (56) gelöst werden, die verschiebbaren Elemente (531) innerhalb der entsprechenden linken und rechten Gleitschienen (51, 52) bewegen können.

5. Motorfahrzeugsitz (3) nach einem der Ansprüche 2 bis 4, ferner **dadurch gekennzeichnet, dass** jede der linken und rechten Gleitschienen (51, 52) eine obere Oberfläche aufweist, die mit einer longitudinalen Reihe von Positionierungslöchern (511, 521) ausgebildet ist, wobei jede der Positionierungseinheiten folgendes aufweist:
ein Positionierungselement (533), das schwenkbar mit einem entsprechenden Element der Verbindungselemente (532) der Schiebeeinheiten (53) verbunden ist und einen festen Einsatzabschnitt (536) aufweist; und
eine Vorbelastungseinheit zur Vorbelastung des Einsatzabschnitts (536) des Positionierungselements (533), so dass ein Eingriff mit einem ausgewählten Loch der Positionierungslöcher (511, 521) in der entsprechenden Schiene der linken und rechten Gleitschienen (51, 52) vorgesehen wird, um ein entsprechendes Element der verschiebbaren Elemente (531) an einer ausgewählten Position der Positionen im Verhältnis zu der entsprechenden Schiene der linken und rechten Gleitschienen (51, 52) zu halten.

6. Motorfahrzeugsitz (3) nach Anspruch 6, ferner **dadurch gekennzeichnet, dass** jedes der Positionierungselemente (533) als eine gekrümmte Stange geformt ist und ferner einen Zickzack-Stangenabschnitt (534) aufweist, der schwenkbar mit dem entsprechenden Element der Verbindungselemente (532) der Schiebeeinheiten (53) verbunden ist, wobei jeder der Einsatzabschnitte (536) der Positionierungselemente (533) in Form einer L-förmigen Stange vorgesehen und fest mit einem Ende eines entsprechenden Abschnitts der Zickzack-Stangenabschnitte (534) verbunden ist, wobei jede der Vorbelastungseinheiten der Positionierungseinheiten als eine zusammengewickelte Spannungsfeder (535) konfiguriert ist, die zwei Enden aufweist, die entsprechend an dem anderen Ende des entsprechenden Abschnitts der Zickzack-Stangenabschnitte (534) und dem entsprechenden Element der Verbindungselemente (532) der Schiebeeinheiten (53) angebracht ist.

7. Motorfahrzeugsitz (3) nach einem der Ansprüche 2 bis 6, **dadurch gekennzeichnet, dass** die Rahmenpositionierungsvorrichtung (552) folgendes aufweist:
eine invertierte U-förmige Wand (553), die fest an der Rückenstütze (551) angebracht ist und zwei parallele, Stangen stützende Wandabschnitte (553a) aufweist;
eine horizontale Stange (557), die sich durch die Stangen stützenden Wandabschnitte (553a) der invertierten U-förmigen Wand (553) erstreckt und fest mit diesen verbunden ist, wobei die oberen Enden (541') der Stützrahmen (54) beweglich und drehbar zwischen den Stangen stützenden Wandabschnitten (553a) der invertierten U-förmigen Wand (553) über der horizontale Stange (557) gezogen sind; und
eine zusammengewickelte Druckfeder (558), die zwischen den oberen Enden (541') der Stützrahmen (54) um die horizontale Stange (557) gezogen ist, um die oberen Enden (541') der Stützrahmen (54) entsprechend gegen die Stangen stützenden Wandabschnitte (553a) der invertierten U-förmigen Wand (553) zu drücken.

8. Motorfahrzeugsitz (3) nach Anspruch.7, ferner **dadurch gekennzeichnet, dass** jedes der oberen Enden (541') der Stützrahmen (54) C-förmig ist und eine gekrümmte Rille (543) definiert, wobei die gekrümmten Rillen (543) in den oberen Enden (541') zwischen den oberen Enden (541') der Stützrahmen (54) angeordnet sind, wobei die Rahmenpositionierungsvorrichtung (552) ferner zwei Druckelemente (559) aufweist, die zwischen dem oberen Ende (541') eines entsprechenden Rahmens der Stützrahmen (54) und der zusammengewickelten Druckfeder (558) jeweils beweglich und drehbar um die horizontale "Stange (557) gezogen sind, wobei jedes der Druckelemente (559) einen halbkreisförmigen äußeren Abschnitt (5591) aufweist, der passend mit der gekrümmten Rille (543) in dem oberen Ende (541') des entsprechenden Rahmens der Stützrahmen (54) eingreift, und mit einem runden, röhrenförmigen inneren Abschnitt (5592), der integral mit dem halbkreisförmigen äußeren Abschnitt (5591) ausgebildet ist, wobei die zusammengewickelte Druckfeder (558) zwei Enden aufweist, die um die entsprechenden runden, röhrenförmigen inneren Abschnitte (5592) der Druckelemente (559) gezogen sind, und die gegen die entsprechenden halbkreisförmigen äußeren Abschnitte (5591) der Druckelemente (559) drücken.

## Revendications

1. Dossier réglable destiné à un siège de véhicule à moteur (3), le dossier comprenant deux rails de guidage (51, 52), des moyens pour monter les rails de guidage sur les côtés du siège de véhicule, deux unités de glissière (53) montées de manière coulissante sur les rails de guidage respectifs et supportant des châssis de support (54) respectifs s'étendant vers le haut, un dossier rembourré (551) monté sur les extrémités supérieures des châssis de support, et des moyens (561, 511) pour bloquer les unités de glissière dans au moins une position avant et une position arrière sur lesdits rails de guidage, **caractérisé en ce que** lesdits rails de guidage (51, 52) convergent et **en ce que** l'on prévoit des moyens (557, 5591) pour permettre le mouvement transversal des châssis de support (54) par rapport au dossier rembourré (551) pour accepter la convergence des rails de guidage.

2. Siège (3) de véhicule à moteur doté d'une partie de siège de conducteur (31) disposée au niveau d'une partie avant du siège (3) de véhicule à moteur, une partie de siège de passager (32) disposée immédiatement derrière la partie de siège de conducteur (31), la largeur de la partie de siège de passager (32) réduisant progressivement de l'extrémité avant à son extrémité arrière, le siège de véhicule à moteur ayant un dossier réglable (5) selon la revendication 1, les rails de guidage (51, 52) dudit dossier étant montés sur les côtés du siège de véhicule.

3. Siège (3) de véhicule à moteur selon la revendication 2, **caractérisé en outre en ce qu'**il comprend deux unités de blocage pour bloquer les éléments coulissants (531) respectifs de manière amovible dans les rails de guidage gauche et droit (51, 52) afin de fixer le dossier rembourré (551) sur le siège (3) de véhicule à moteur.

4. Siège (3) de véhicule à moteur selon la revendication 3, **caractérisé en ce** outre en ce que chacun des rails de guidage gauche et droit (51, 52) est formé comme un tube rectangulaire et a une paroi latérale externe qui est formée avec une fente longitudinale (512, 522) à travers celle-ci, les éléments coulissants (531) étant également formés comme des tubes rectangulaires qui sont montés dans les rails de guidage gauche et droit (51, 52) respectivement, chacun des éléments coulissants (531) ayant une paroi latérale externe qui est formée avec un trou fileté (531') à travers celle-ci et en ce que les unités de blocage sont deux boulons de blocage (56) qui s'étendent à travers les fentes longitudinales (512, 522) respectives dans les rails de guidage gauche et droit (51, 52) et qui mettent en prise les trous filetés (531') respectifs dans les éléments coulissants (531) afin de bloquer les éléments coulissants (531) respectifs de manière amovible dans les rails de guidage gauche et droit (51, 52), moyennant quoi les boulons de blocage (56) sont desserrés, les éléments coulissants (531) peuvent se déplacer dans les rails de guidage gauche et droit (51, 52) respectifs.

5. Siège (3) de véhicule à moteur selon l'une quelconque des revendications 2 à 4, **caractérisé en outre en ce que** chacun des rails de guidage gauche et droit (51, 52) a une surface supérieure qui est formée avec une rangée longitudinale de trous de positionnement (511, 521), chacun des trous de positionnement, comprenant :
un élément de positionnement (533) raccordé de manière pivotante à un élément correspondant des éléments de raccordement (532) des unités de glissière (53) et ayant une partie d'insertion fixe (536) ; et
une unité de rappel pour solliciter la partie d'insertion (536) de l'élément de positionnement (533) pour mettre en prise un trou sélectionné des trous de positionnement (511, 521) dans un rail correspondant des rails de guidage gauche et droit (51, 52) afin de retenir un élément correspondant des éléments coulissants (531) au niveau de la position sélectionnée des positions par rapport au rail correspondant des rails de guidage gauche et droit (51, 52).

6. Siège (3) de véhicule à moteur selon la revendication 5, **caractérisé en outre en ce que** chacun des éléments de positionnement (533) est formé comme une tige incurvée, et comprend en outre une partie de tige de zigzag (534) raccordée de manière pivotante à l'élément correspondant des éléments de raccordement (532) des unités de glissière (53), chacune des parties d'insertion (536) des éléments de positionnement (533) se présentant sous la forme d'une tige en forme de L et étant raccordée de manière fixe à une extrémité d'une partie correspondante des parties de tige en zigzag (534), chacune des unités de rappel des unités de positionnement étant configurée comme un ressort hélicoïdal de tension (535) qui a deux extrémités qui sont fixées respectivement sur l'autre extrémité de la partie correspondante des parties de tige en zigzag (534) et de l'élément correspondant des éléments de raccordement (532) des unités de glissière (53).

7. Siège (3) de véhicule à moteur selon l'une quelconque des revendications 2 à 6, **caractérisé en ce que** le dispositif de positionnement de châssis (552) comprend :
une paroi en forme de U inversé (553) montée de manière fixe sur le dossier rembourré (551) et ayant deux parties de paroi de support de tige (553a) parallèles ;
une tige horizontale (557) s'étendant à travers et raccordée de manière fixe aux parties de paroi de support de tige (553a) de la paroi en forme de U inversé (553), les extrémités supérieures (541') des châssis de support (54) étant rapportées de manière mobile et rotative sur la tige horizontale (557) entre les parties de paroi de support de tige (553a) de la paroi en forme de U inversé (553) ; et
un ressort hélicoïdal de compression (558) rapporté autour de la tige horizontale (557) entre les extrémités supérieures (541') des châssis de support (54) afin de comprimer les extrémités supérieures (541') des châssis de support (54) respectivement contre les parties de paroi de support de tige (553a) de la paroi en forme de U inversé (553).

8. Siège (3) de véhicule à moteur selon la revendication 7, **caractérisé en outre en ce que** chacune des extrémités supérieures (541') des châssis de support (54) est en forme de C, et définit une rainure incurvée (543), les rainures incurvées (543) dans les extrémités supérieures (541') étant situées entre les extrémités supérieures (541') des châssis de support (54), le dispositif de positionnement de châssis (552) comprenant en outre deux éléments de compression (559), dont chacun est rapporté de manière mobile et rotative autour de la tige horizontale (557) entre l'extrémité supérieure (541') d'un châssis respectif des châssis de support (54) et le ressort hélicoïdal de compression (558), chacun des éléments de compression (559) ayant une partie externe semi sphérique (5591) qui met convenablement en prise la rainure incurvée (543) dans l'extrémité supérieure (541') du châssis respectif des châssis de support (54), et une partie interne tubulaire circulaire (5592) qui est formée de manière solidaire avec la partie externe semi sphérique (5591), le ressort hélicoïdal de compression (558) ayant deux extrémités qui sont rapportées autour des parties internes tubulaires circulaires (5592) respectives des éléments de compression (559) et qui sont comprimées contre les parties externes semi sphériques (5591) respectives des éléments de compression (559).
